(19) Europäisches Patentamt
European Patent Office
Office européen des brevets

(11) Publication number: **0 082 579**
**A1**

(12) **EUROPEAN PATENT APPLICATION**

(21) Application number: 82201640.8

(22) Date of filing: 21.12.82

(51) Int. Cl.³: C 10 K 1/10
C 01 B 17/05, B 01 D 53/34

(30) Priority: 22.12.81 US 333516

(43) Date of publication of application: 29.06.83 Bulletin 83/26

(84) Designated Contracting States: BE CH DE FR GB IT LI NL SE

(71) Applicant: STAUFFER CHEMICAL COMPANY
Westport Connecticut 06880(US)

(72) Inventor: Canalas, Manuel Julio
698 North Greenbrier Drive
Orange Connecticut 06477(US)

(74) Representative: Urbanus, Henricus Maria, Ir. et al,
c/o Vereenigde Octrooibureaux Nieuwe Parklaan 107
NL-2587 BP 's-Gravenhage(NL)

(54) **Self-regulating process for removal of hydrogen sulfide from gases.**

(57) A self-regulating process for removal of hydrogen sulfide from gases comprising the absorption of a first part of the hydrogen sulfide from the gas stream in an aqueous solution of sulfur dioxide to form elemental sulfur, separation of the remaining amount of hydrogen sulfide from the gas stream by a conventional absorption system (9), recovery of the hydrogen sulfide from the conventional absorption system, conversion of the recovered hydrogen sulfide to sulfur dioxide and use of the sulfur dioxide to form the aqueous solution of sulfur dioxide used to absorb the first part of the hydrogen sulfide.

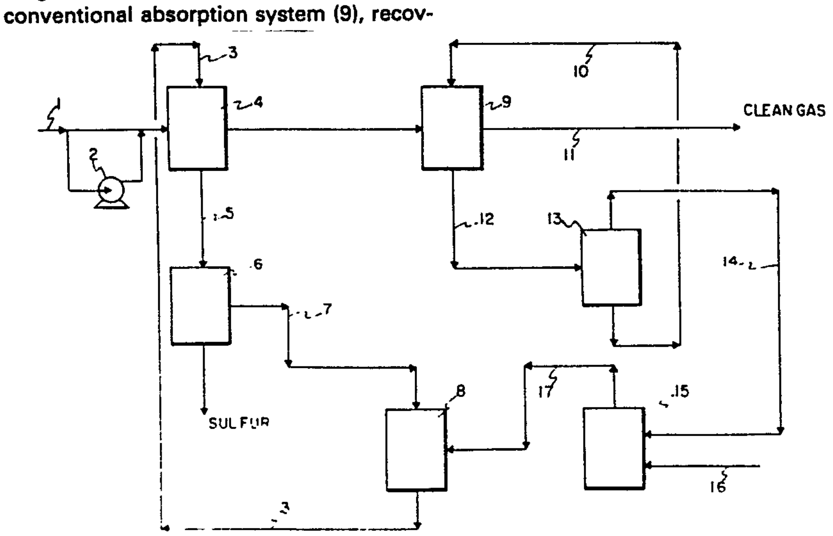


EP 0 082 579 A1

SELF-REGULATING PROCESS FOR REMOVAL OF HYDROGEN SULFIDE FROM GASES

## Background of the Invention

The present invention relates to a process for the removal of hydrogen sulfide from gases. More particularly, the present invention relates to the removal of hydrogen sulfide from gases by a self-regulating process whereby the hydrogen sulfide is reacted with sulfur dioxide, which is internally-generated in self-regulated amounts.

In many organic conversion or refining processes, one or more gas streams are generated which contain varying amounts of hydrogen sulfide as an undesirable ingredient. It is often imperative that the hydrogen sulfide content of such gas streams be eleminated, or at least substantially reduced, before the gas products can find further use.

The removal of hydrogen sulfide has received a great deal of attention in the prior art. Of the processes which are used for the removal of hydrogen sulfide from gas streams, the most common are based on the use of sulfur dioxide to react with the hydrogen sulfide to form sulfur, which can then be removed from the process with relative ease.

U.S. Patent 1,915,364 teaches a process wherein the hydrogen sulfide gas is divided into two parts. One part is burned to generate sulfur dioxide, which is then reacted with the other part to form sulfur, thus consuming both parts. The inherent weakness of this

process is that it would not be suitable for treating a combustible gas stream, such as a hydrocarbon gas; and requires careful control of the relative amounts into which the initial gas stream is split.

U.S. Patent 2,946,652 teaches a process wherein a gas stream containing hydrogen sulfide is contacted with an absorbent comprising an organic amine, a substantially anhydrous, hydrophilic glycol compound and a hydrocarbon which is at least partially soluble in the glycol compound. The hydrogen sulfide is absorbed from the gas by the absorbent, to produce a relatively "clear" gas stream. The absorbent may then be distilled to remove the hydrogen sulfide.

Other amine-type absorbent systems are also known.

U.S. Patent 2,152,454 teaches a process whereby a crude gas containing ammonia, hydrogen sulfide and benzene and similar hydrocarbons is washed with an acid thionate or sulfite-bisulfate solution to remove all or the greater part of the ammonia, and that part of the hydrogen sulfide which, when converted to sulfur dioxide, would not be "taken up" by a circulating washing solution in the second step. The gas stream is then passed through a catalyst, with an oxidizing agent, whereby the hydrogen sulfide is converted to sulfur dioxide. The gas stream is then washed in a "main washing stage" wherein the sulfur dioxide "serves for the production of bisulfate with sulphite solutions". "The bisulphite thus formed in the main washing stage, according to its amount, then determines the amount of hydrogen sulphide

which is washed out in the preliminary washing so that the composition of the absorption liquid is automatically regulated so that it compeletely absorbs both the ammonia and the hydrogen sulphide or the sulphur dioxide formed therefrom." This process, however, requires that the entire gas stream be exposed to the catalyst, which may be undesirable for certain gases.

A need therefore exists for a self-regulating process for removing hydrogen sulfide from gas streams without the need to expose the entire gas stream to a catalyst.

A process has now been found by which hydrogen sulfide can be removed from gas streams by reacting the hydrogen sulfide with sulfur dioxide, which is formed from a portion of the hydrogen sulfide in self-regulated amounts, without the need to expose the entire gas stream to a catalyst.

Summary of the Invention

In accordance with the present invention, there is provided a self-regulated process for removing hydrogen sulfide from a hydrogen sulfide-containing gas stream comprising the steps of:

a) scrubbing the gas stream with an aqueous solution of sulfur dioxide whereby essentially all of the sulfur dioxide in the aqueous solution is reacted with a portion of the hydrogen sulfide contained therein to form sulfur and water, and the remaining portion of the hydrogen sulfide remains unreacted;

b) then scrubbing the gas stream with an absorbent to remove essentially all of the remaining hydrogen sulfide to form an essentially hydrogen sulfide free gas stream and a hydrogen sulfide rich absorbent;

c) desorbing the hydrogen sulfide from the hydrogen sulfide rich absorbent to obtain a lean absorbent which is recycled to the hydrogen sulfide absorbent step (b), and a hydrogen sulfide stream;

d) oxidizing the hydrogen sulfide stream to form sulfur dioxide, and dissolving the sulfur dioxide in an aqueous medium to form an aqueous solution of sulfur dioxide and;

e) using the aqueous solution of sulfur dioxide as the scrubbing solution in step (a), essentially all of the aqueous solution of sulfur dioxide being used in step (a) and comprising essentially the sole source of sulfur dioxide used in that step;

whereby the amount of hydrogen sulfide which remains after step (a) to be converted to sulfur dioxide is self-regulated so that the reaction between the sulfur dioxide and that portion of the hydrogen sulfide which is not converted to sulfur dioxide to form sulfur and water has the overall effect of consuming essentially all of the hydrogen sulfide contained in the original gas stream.

Detailed Description of the Invention

In practicing the present invention, the crude $H_2S$-laden gas stream is scrubbed with an aqueous solution of $SO_2$, to remove a part,but not all, of the $H_2S$.

By "aqueous solution of $SO_2$", as that term is used herein, is meant an aqueous medium in which $SO_2$ has been dissolved. Once dissolved in the aqueous media, the $SO_2$ will normally form sulfurous acid (Reaction(1)) which partially ionizes to form bisulfite and hydrogen ions. (Reaction (2)):

$$SO_2 + H_2O \rightleftharpoons H_2SO_3 \qquad (1)$$

$$HSO_3 \rightleftharpoons HSO_3^- + H^+ \qquad (2)$$

In a preferred embodiment of the invention the dissolution of $SO_2$ in water is enhanced by the addition of salts which provide a pH buffering action but which are not consumed in the process. Examples of salts used for this purpose are alkali metal salts of phosphoric, citric or other weak acids, or ammonium salts of phosphoric, citric or other weak acids.

The concentration of the aqueous solution of sulfur dioxide used may range from about 1 gram of $SO_2$/liter of solution to about 30 grams/liter of solution. The crude $H_2S$-laden gas stream which is treated in accordance with the present invention for the removal of $H_2S$ can be virtually any gas. Examples of the gases which are typical are natural gas, synthetic fuel gases, coke oven gases, various gas streams formed during the refining of crude oil, hydrogen gas, carbon dioxide and the like.

The concentration of hydrogen sulfide in the crude gas stream can vary widely, and the process of the present invention is not limited to any particular concentration range. In those cases where the hydrogen sulfide concentration is less than about 25%, however, it may be desirable to perform the initial

scrubbing of the gas stream under elevated pressure. This can be helpful because the reaction rate of the hydrogen sulfide and the sulfer dioxide (or bisulfite ion) can be limited by the dissolution rate of the hydrogen sulfide, and the dissolution rate can be increased by increasing the pressure. The dissolution of the hydrogen sulfide in the aqueous media is represented by equation (3) as follows:

$$H_2 \rightleftharpoons HS^- + H^+ \qquad (3)$$

Once dissolved the sulfide ion reacts quickly and irreversibly with the bisulfite ion formed in reaction (2) to produce elemental sulfur and water, as is shown in reaction (4):

$$3H^+ + 2HS^- + HSO_3^- \longrightarrow 3S + 3H_2O \quad (4)$$

It is preferred to maintain the pH of the aqueous media below about 5 during the initial scrubbing, because at such pHs a crystalline form of sulfur is generally formed while at pH above 5 the colloidal form can result. The crystalline form is easier to separate from the aqueous media then the form is.

The crude gas, after being treated with the aqueous solution of sulfur dioxide, will have a diminished amount of hydrogen sulfide. The amount of hydrogen sulfide which remains in the crude gas is removed in a conventional hydrogen sulfide absorption system to produce an essentially hydrogen sulfide free gas stream.

There are many absorption systems known in the art which can be used to remove the remaining hydrogen sulfide from the crude gas stream. The system used, however, should be one wherein the hydrogen sulfide can be easily recovered from the absorbent and the absorbent easily regenerated for reuse. Typical absorption systems which can be used in the practice of the present invention are those based on potassium carbonate, monoethanolamine, diethanolamine, methyldiethanolamine, sulfinol (a mixture of tetrahydrothiophene dioxide, diisopropanolamine and water available from Shell Development Company) or Selexol (a dimethylether polyethylene glycol solvent available from Allied Chemical Company).

After the hydrogen sulfide has been absorbed from the crude gas stream,the essentially hydrogen sulfide free gas stream leaves the process for its intended use. The absorbent is flashed and/or stripped to remove the hydrogen sulfide therefrom and regenerate the absorbent. The regenerated absorbent is recycled to the process.

The hydrogen sulfide stream is oxidized to form sulfur dioxide, which is then dissolved in the aqueous media to form the aqueous solution of sulfur dioxide which is used in the first step of the process.

It can be seen that the process is self-regulating since the amount of sulfur dioxide which is generated is automatically increased or decreased to accomodate the overall amount of hydrogen sulfide coming into the process. Thus, for example, if there were a stepwise increase in the amount of hydrogen sulfide entering the process, there would be an increase in the amount of unabsorbed hydrogen sulfide leaving the first step, and this would ultimately

result in an increase in the amount of sulfur dioxide generated. The increased amount of sulfur dioxide would be fed back to the first step, which would increase the amount of hydrogen sulfide absorbed. Ultimately, therefore, the system would reach a balance so that all of the $H_2S$ entering the system would be removed as sulfur, either by reacting directly with $SO_2$, or by being itself converted to $SO_2$ and then reacted with $H_2S$ to form sulfur.

A preferred embodiment of the present invention is illustrated in the accompanying drawing.As shown in drawing, the $H_2S$-containing crude gas stream (1) is optionally compressed in compressor or blower (2), and enters $H_2S$ scrubber (4) where it is scrubbed with the aqueous solution of $SO_2$ (3). Part, but not all, of the $H_2S$ reacts with the $SO_2$ to form sulfur and water. The bottoms product (5) from the scrubber is comprised essentially of sulfur and water. The sulfur and water are separated in sulfur-separator (6), which may be comprised of conventional solids/liquids separation equipment such as a filter, centrifuge, flotation chamber or the like, or may consist of a heating step to melt the sulfur followed by a settling device to separate the molten sulfur from the water by means of their differences in specific gravity. The recovered sulfur can then be disposed of through any one of several channels of commerce. The water (7) can, of course be reused for the preparation of additional aqueous solution of $SO_2$.

The crude gas, having a reduced amount of hydrogen sulfide, passes out of scrubber (4) and into absorber (9). In absorber (9), a conventional $H_2S$-absorbent, such as monoethanolamine, scrubs the crude gas to remove essentially all of the remaining $H_2S$, and produce an essentially $H_2S$-free clean gas stream and a rich absorbent stream (12). The essentially $H_2S$ free gas stream (i.e., the "clean gas"), then leaves the process and proceeds to its intended use.

The rich absorbent (12) is fed to a desorption system (13), such as a distillation column or a stripping column, where the absorbed $H_2S$ along with other co-absorbed gases such as $CO_2$, is removed from the absorbent to produce an $H_2S$ bearing stream (14) and lean absorbent stream (10), which is recycled back to the $H_2S$ absorber (9).

The $H_2S$ bearing stream (14) is then charged to an oxidation process (15), which could be thermal or catalytic incineration, where it is completely oxidized (using air or oxygen (16)) to form an $SO_2$ bearing stream (17). The $SO_2$ bearing stream (17) is then conveyed to $SO_2$ absorber (8) where the $SO_2$ is dissolved in an aqueous media, which could be the aqueous media (7) recovered from sulfur-separator (6), to form an aqueous solution of $SO_2$ (3), which is then charged back to scrubber (4) to absorb incoming $H_2S$.

## Claims

1. A self-regulating process for removing hydrogen sulfide from a hydrogen sulfide-containing gas stream comprising the steps of:

a) scrubbing said gas stream with an aqueous solution of sulfur dioxide whereby essentially all of the sulfur dioxide in said aqueous solution is reacted with a portion of the hydrogen sulfide contained therein to form sulfur and water, and the remaining portion of the hydrogen sulfide remains unreacted;

b) then scrubbing said gas stream with an absorbent to remove essentially all of the remaining hydrogen sulfide to form an essentially hydrogen sulfide free gas stream and a hydrogen sulfide rich absorbent;

c) desorbing said hydrogen sulfide from said hydrogen sulfide rich absorbent to obtain a lean absorbent which is recycled to the hydrogen sulfide absorbent step (b), and a hydrogen sulfide stream;

d) Oxidizing said hydrogen sulfide stream to form sulfur dioxide, and dissolving said sulfur dioxide in an aqueous medium to form an aqueous solution of sulfur dioxide and;

e) using said aqueous solution of sulfur dioxide as the scrubbing solution in step (a), essentially all of said aqueous solution of sulfur dioxide being used in step (a) and comprising essentially the sole source of sulfur dioxide used in said step;

Whereby the amount of hydrogen sulfide which remains after step (a) to be converted to sulfur dioxide is self-regulated so that the reaction between the sulfur dioxide and that portion of the hydrogen sulfide which is not converted to sulfur dioxide to form sulfur and water has the overall effect of consuming essentially all of the hydrogen sulfide contained in the original gas stream.

2. The process of claim 1 wherein said aqueous solution of sulfur dioxide is sulfurous acid.

3. The process of claim 2 wherein said aqueous solution of sulfur dioxide also contains a buffer.

4. The process of claim 1 wherein step (a) is conducted at a pressure above atmosphere.

5. The process of claim 3 wherein the pH of said aqueous solution of sulfur dioxide is less than about 5.

6. The process of claim 1 wherein said absorbent is monoethanolamine, diethanolamine, methyldiethanolamine, a mixture of tetrahydrothiophene dioxide, diisopropanolamine and water; dimethylether polyethylene glycol or mixtures thereof.

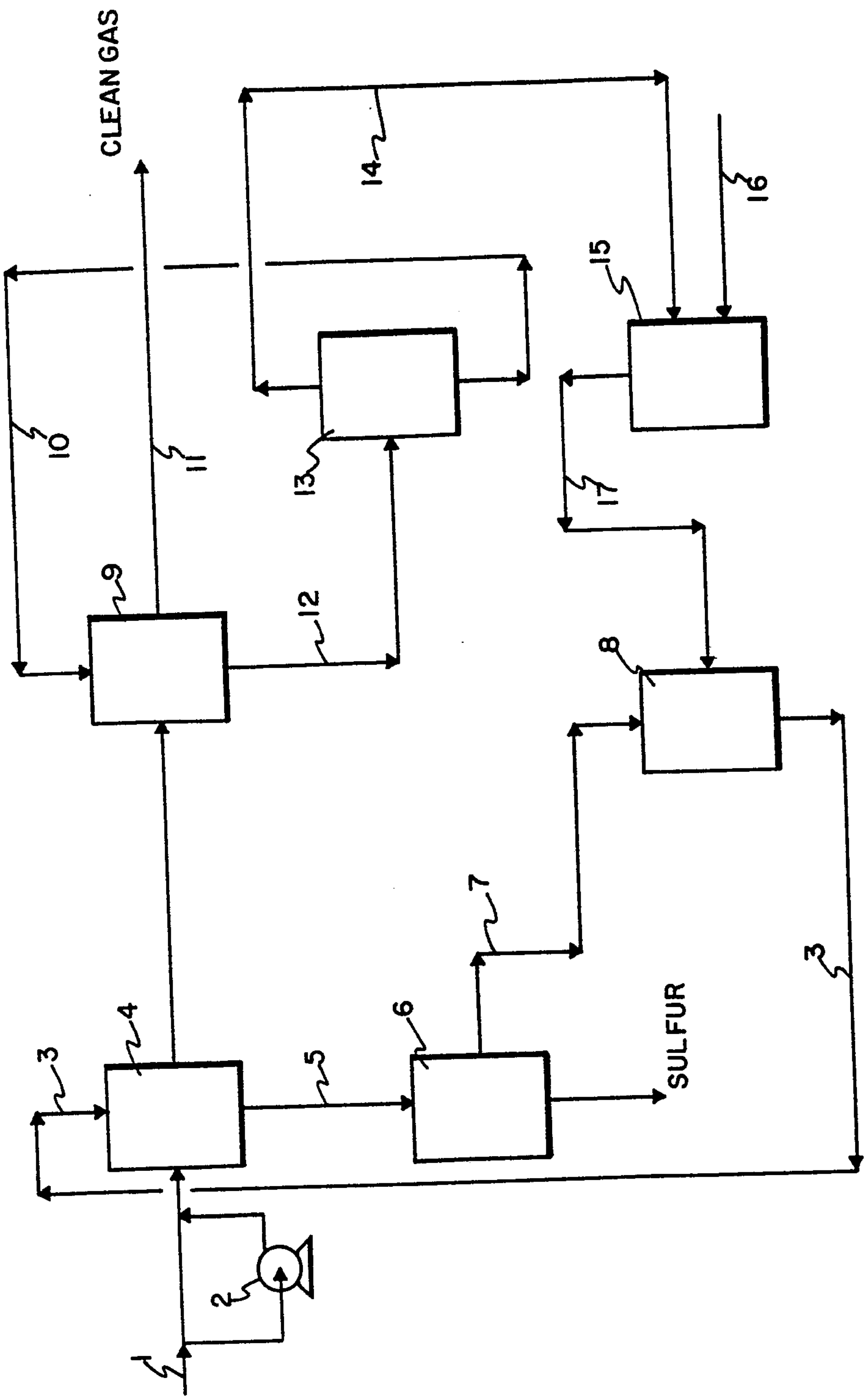
CLEAN GAS
SULFUR
1
2
3
4
5
6
7
8
9
10
11
12
13
14
15
16
17

European Patent Office

# EUROPEAN SEARCH REPORT

0082579
Application number

EP 82 20 1640

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | NL-C- 37 666 (THE GIRDLER CORP.) *Page 2, line 88 - page 3, line 115; figure 1* | 1,2 | C 10 K 1/10<br>C 01 B 17/05<br>B 01 D 53/34 |
| | --- | | |
| X | US-A-1 937 196 (H.A.GOLLMAR) *Page 2, line 13 - page 3, line 146; figure* | 1 | |
| | --- | | |
| D,A | US-A-2 946 652 (H.S.BLOCH) *Column 1, lines 8-25; column 3, line 19 - column 4, line 71* | 6 | |
| | --- | | |
| D,A | US-A-1 915 364 (J.W.HARREL) *Page 1, line 24 - page 2, line 31* | 4 | TECHNICAL FIELDS SEARCHED (Int. Cl. 3) |
| | --- | | |
| A | US-A-4 056 606 (R.GERMERDONK) *Column 3, lines 11-22; column 3, line 52 - column 4, line 29* | 2,3,5 | B 01 D<br>C 10 K<br>C 01 B |
| | ----- | | |

The present search report has been drawn up for all claims

| Place of search | Date of completion of the search | Examiner |
|---|---|---|
| THE HAGUE | 16-03-1983 | BLASBAND I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82